# EUROPEAN PATENT SPECIFICATION

(11) **EP 3 336 537 B1**
(45) Date of publication and mention of the grant of the patent: **07.06.2023**
(21) Application number: 16852959.2
(22) Date of filing: 06.05.2016
(51) Int. Cl.: G01N 30/88

(54) **METHOD FOR IDENTIFYING ANIMAL SKIN/HIDE**
VERFAHREN ZUR IDENTIFIZIERUNG VON TIERHAUT/-FELL
PROCÉDÉ PERMETTANT D'IDENTIFIER DES PEAUX/CUIRS D'ANIMAUX

(30) Priority: 09.10.2015 CN 201510649274
(43) Date of publication of application: 20.06.2018
(73) Proprietor: Dong-e E-jiao Co., Ltd, Liaocheng, Shandong 252299 (CN)
(72) Inventor: HAO, Xianghui, Liaocheng, Shandong 252299 (CN); GUO, Shangwei, Liaocheng, Shandong 252299 (CN); DUAN, Xiaobo, Liaocheng, Shandong 252299 (CN); ZHOU, Xiangshan, Liaocheng, Shandong 252299 (CN); TIAN, Shousheng, Liaocheng, Shandong 252299 (CN); XU, Yunpeng, Liaocheng, Shandong 252299 (CN); WANG, Jing, Liaocheng, Shandong 252299 (CN); HUANG, Yifan, Liaocheng, Shandong 252299 (CN); WANG, Yujiao, Liaocheng, Shandong 252299 (CN); ZHANG, Yunxia, Liaocheng, Shandong 252299 (CN)
(74) Representative: Prüfer & Partner mbB Patentanwälte · Rechtsanwälte
(86) International application number: PCT/CN2016/000244
(87) International publication number: WO 2017/059647

(56) References cited:
- CN-A- 1 605 868
- CN-A- 103 630 621
- CN-A- 104 280 468
- CN-A- 104 280 468
- CN-A- 105 223 291
- XIAN-LONG CHENG ET AL: "Using the Doubly Charged Selected Ion Coupled with MS/MS Fragments Monitoring (DCSI-MS/MS) Mode for the Identification of Gelatin Species", JOURNAL OF ANALYTICAL METHODS IN CHEMISTRY, vol. 2014, 13 March 2014 (2014-03-13), pages 1-7, XP055575327, ISSN: 2090-8865, DOI: 10.1155/2014/764397
- LI, WENLONG ET AL.: 'A Feasibility Study on the Non-Invasive Analysis of Bottled Compound E Jiao Oral Liquid Using Near Infrared Spectroscopy' SENSORS AND ACTUATORS B: CHEMICAL vol. 211, 29 January 2015, pages 131 - 137, XP055374960

## Description

### Technical field

This invention relates to a method for identifying an animal skin/hide, in particular to a method for identifying donkey hide by using liquid chromatography-mass spectrometry, which can be used for the identification of donkey hide, horse hide, mule hide and cow hide.

### Background of the technique

CN 104 280 468 A discloses a method for detecting a horse-derived and mule-derived component in a gum-based Chinese medicine and its products and aims to identify whether the horses and the mule are mixed in the traditional Chinese medicine and the products thereof. This known method comprises identifying horse or mule hides using liquid chromatography - mass spectrometry and monitoring the doubly-charged precursor ion having an m/z ratio 386,4 and its product ions.

CN 103 630 621 A discloses a method for detecting sheep-derived ingredients in glue type traditional Chinese medicines and products thereof. This known method of distinguishing sheep skin gelatin from donkey, horse, pig, tortoise and deer gelatin products comprises monitoring the precursor ion having an m/z ratio of 751,9 and its product ions with m/z ratios of 608,4, 846,6 and 903,5.

Xian-Long Chen ET AL: "Using the Doubly Charged Selected Ion Coupled with MS/MS Fragments Monitoring (DCSI-MS/MS) Mode for the Identification of Gelatin Species", Journal of Analytycal Methods in Chemistry, vol.2014, 13 March 2014, pages 1-7, XP055575327 discloses a method for identifying animal specific gelatin by using liquid chromatography - mass spectrometry and monitoring species-specific precursor ions as defined by m/z ratio (765,8 for donkey-hide, 641,5 for bovine-hide, 924,5 for pig-hide, 758,8 for tortoise shell and 732,8 for deer horn) and their product ions.

Ejiao is a traditional Chinese medicine, it has been taking as a medicine for thousands of years, and is known to have effects of blood nourishing, Yin deficiency treating, dryness syndrome moistening, as well as hemostasis. According to Chinese Pharmacopoeia, Ejiao is solid gelatin made by decocting donkey (*Equus asinus L.*) dry- or fresh-hide and then concentrating the decocted fluid to dryness. Genuine Ejiao must come from 100% donkey hide to ensure the efficacy of the product.

Currently, it is needed to identify the authenticity of donkey hides in the acquisition, to prevent the counterfeits with horse hide, mule hide and cow hide etc. By using direct observation of the donkey hides with naked eyes, however, there are often ambiguous cases, in which a certain level of subjectivity would lead to wrong judgment, as a result it is very difficult to accurately distinguish different kinds of hides, especially the morphologically similar horse-, mule- and donkey-hides. Although DNA molecular identification method can distinguish donkey hide and horse hides, the distinction between donkey hide and mule hides is weaker. Besides, its operation is cumbersome with false negatives and positives in the results, and, expensive detecting consumables and longer time consumed make it difficult to achieve batch testing.

The method of liquid chromatography-mass spectrometry has long been mature. As long as the characteristic components of animal-derived components are found stably, they can be used for detection. Cow-, pig-, turtle-, deer-derived components in the gelatinous traditional Chinese medicine have been reportedly identified using liquid chromatography-mass spectrometry method. However, although there were reports on the detection of characteristic ingredients in donkey hide components, actually there were common components of donkey- and horse-hides, thus they cannot be used to distinguish the two. At present, there is still no test for distinguishing donkey hides, horse hides and mule hides by liquid chromatography-mass spectrometry, because biologically the differences between donkey, horse and mule are limited, the genetic relationship between them are very near, tremendous efforts are needed to find, identify and confirm stable characteristic components yet. The establishment of a rapid identification method of donkey hides, horse hides, mule hides and cow hides has important practical significance for quality assurance of Ejiao raw material.

### Contents of the invention

Aiming to solve the problems and shortcomings stated above, main purpose of the present invention is to provide a method for identifying animal skin/hides which can be used for rapid identification and distinguishing of donkey hides, horse hides, mule hides and cow hides. The accuracy rate of this method can reach 100% and the method also the advantages of high specificity, consistency, ease of operation, low cost of detection supplies, and batch operation suitability.

The above object is achieved by the method for identifying animal hides according to claim 1.

With the method of the present invention, it is possible to quickly distinguish between donkey hide, horse hide, mule hide and cow hide. The present invention investigated a large number of donkey hides of different donkey species, horse hides of different horse species and mule hides, further demonstrating the reliability of the method. Among the donkey species tested, the hides of Guanzhong-, Dezhou-, Guangling-, Jinnan-, Jiamei-, Biyang-, Huaiyang-, Qingyang-, North China-, Xinjiang- and Southwest-donkey, etc. were tested. The hides of horse species tested includeing Mongolian-, Yili-, Southwest-, Yunnan-, Baise-, Guizhou-, Sanhe-, Barry Kun-horse and so on.

### The Description of the Drawings

In order to make the objectives, technical solutions and advantages of the present invention clearer, the present invention will be further described in detail with reference to the attached drawings, in which:

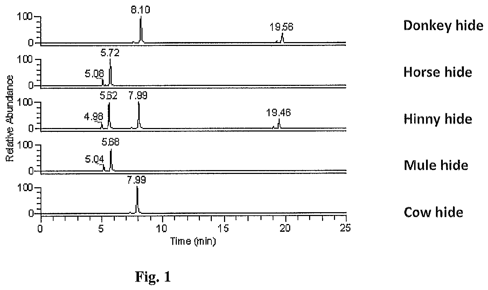

Figure 1 shows the MRM scanning total ion current mass spectrograms of animal hide samples.

### Embodiments

Hereinafter, preferred embodiments of the present invention will be described in detail with reference to the attached spectrograms. In the experimental procedures of preferred embodiments below, if no specific conditions are indicated, they are generally performed according to conventional conditions or conditions suggested by the manufacturer.

### Embodiment 1 Identification for an Animal Hide

### 1. Materials and reagents

Material: various kinds of animal hides, including donkey hide, horse hide, hinny hide, mule hide, and cow hide.

Reagents: ammonium bicarbonate (analytical grade), trypsin (sequential grade, purchased from China National Institutes for Food and Drug Control).

### 2. Test methods

### (1) Preparation of enzymatic hydrolysis solution of animal hide samples

After removing hair, subcutaneous fat layer and other impurities, the hide sample to be tested was cut into chippings with a size of 2mm or less, 0.01g of the chippings were weighed into a 1.5ml EP tube, added with 1ml of 1% (w/w) NH₄HCO₃ solution (pH8.0). After adding 100 µl 2 mg/ml trypsin solution, the sample mixture was hydrolyzed at 37°C for 6 h, the resulting solution was filtered through a microporous membrane.

### (2) Detection by using liquid chromatography-mass spectrometry

Inject 5µl subsequent filtrate of the enzymatic solution into LC/MS for detection. The LC conditions were: C₁₈ reversed phase column (2.1 mm × 100 mm, 1.8 µm), mobile phase A was 0.1% (v/v) formic acid solution, mobile phase B was acetonitrile at a flow rate of 0.3 ml/min; gradient conditions: 0~25 min, 2% ~ 20% (v/v) B. MS conditions: electrospray positive ion mode (ESI⁺), performing multiple reaction monitoring at m/z 386.3 → 402.3, and 499.3; m/z 393.3 → 402.3, and 499.3, m/z 690.8 → 752.4, and 809.5.

The results are shown in Figure 1. LC peak at 5.62 ~ 5.72min, two ion pairs (m/z386.3 → 402.3, m/z386.3 → 499.3) were detected simultaneously. LC peak at 7.99 ~ 8.10min two ion pairs (m/z393.3 →402.3, m/z393.3→499.3) were detected simultaneously. LC peak at 19.46-19.56 min two ion pairs (m/z690.8 → 752.4, m/z690.8 → 809.5) were detected simultaneously. From donkey hide samples, only ion pairs of m/z393.3 → 402.3, and 499.3; m/z690.8 → 752.4 and 809.5 were detected, and no ion pairs of m/z 386.3 → 402.3 and 499.3 were detected. From horse and mule hide samples, only ion pair of m/z 386.3 → 402.3, and 499.3 detected, but no ion pairs of m/z 393.3 → 402.3, and 499.3, m/z 690.8 → 752.4 and 809.5 were detected. From hinny hide samples, ion pairs of m/z 386.3 → 402.3, and 499.3; m/z 393.3 → 402.3, and 499.3, m/z 690.8 → 752.4, and 809.5 were detected. From cow hide samples, only ion pair of m/z 393.3 → 402.3, and 499.3 were detected, ion pairs of m/z 386.3 → 402.3, and 499.3, m/z 690.8 → 752.4, and 809.5 were not detected.

In summary, according to the characteristic ions of the hide samples of different animal species, the method of liquid chromatography-mass spectrometry is used for the accurate identification and differentiation of donkey hides, horse hides, the mule hides and cow hides, especially suitable for the identification of donkey hide. This technique has the advantage of high specificity, ease of operation, low cost of testing supplies, and it is suitable for batch operation.

## Claims

1. The method for identifying animal hides, wherein following steps are comprised:
(1) Preparation of the test solution: remove the hide sample of hair, subcutaneous fat layer and other impurities, digested using trypsin;
(2) Detection by using liquid chromatography-mass spectrometry; and
(3) Determine that the dermal sample belongs to what kind of animal hide according to mass spectra of the sample, **characterized in that**
Step (2): Apply multiple reaction monitoring technique in electrospray positive ion mode, scan following detecting ions: m/z 386.3 ± 0.1% → 402.3 ± 0.1%, 386.3 ± 0.1% → 499.3 ± 0.1%, m/z 393.3 ± 0.1% → 402.3 ± 0.1%, 393.3 ± 0.1% → 499.3 ± 0.1%, m/z 690.8 ± 0.1% → 752.4 ± 0.1%, 690.8 ± 0.1% → 809.5 ± 0.1%; wherein the LC conditions used in the liquid chromatography-mass spectrometry detection are: 2.1 mm × 100 mm, 1.8 µm C₁₈ reversed phase column, the mobile phase A is 0.1% formic acid solution, mobile phase B is acetonitrile, the flow rate is 0.3 ml/min, and the elution gradient used is 0 ~ 25min, 2% ~20% B; and
Step (3): only the mass spectrum peak whose two sub-ions corresponding to the same parent ion detected simultaneously are used as the aim peak for identifying:
a) When only the peak of ion pairs m/z 393.3 ± 0.1% → 402.3 ± 0.1%, and 393.3 ± 0.1% → 499.3 ± 0.1%; m/z 690.8 ± 0.1% → 752.4 ± 0.1%, and 690.8 ± 0.1% → 809.5 ± 0.1% are detected, whereas the peak of m/z 386.3 ± 0.1% → 402.3 ± 0.1%, and 386.3 ± 0.1% → 499.3 ± 0.1% are not detected, the hide sample is attributed to a donkey;
b) When only the peak of ion pairs m/z 393.3 ± 0.1% → 402.3 ± 0.1%, and 393.3 ± 0.1% → 499.3 ± 0.1% are detected, whereas the peak of m/z 386.3 ± 0.1% → 402.3 ± 0.1%, and 386.3 ± 0.1% → 499.3 ± 0.1%; m/z 690.8 ± 0.1% → 752.4 ± 0.1%, and 690.8 ± 0.1% → 809.5 ± 0.1% are not detected, the hide sample is attributed to a cow;
c) When only the peak of ion pairs m/z 386.3 ± 0.1% → 402.3 ± 0.1%, and 386.3 ± 0.1% → 499.3 ± 0.1%, are detected, whereas the peak of m/z 393.3 ± 0.1% → 402.3 ± 0.1%, and 393.3 ± 0.1% → 499.3 ± 0.1%; m/z 690.8 ± 0.1% → 752.4 ± 0.1%, and 690.8 ± 0.1% → 809.5 ± 0.1% are not detected, the hide sample is attributed to a mule or a horse;
d) When all the following peaks: m/z 386.3 ± 0.1% → 402.3 ± 0.1%, and 386.3 ± 0.1% → 499.3 ± 0.1%; m/z 393.3 ± 0.1% → 402.3 ± 0.1%, and 393.3 ± 0.1% → 499.3 ± 0.1%; m/z 690.8 ± 0.1% - 752.4 ± 0.1%, and 690.8 ± 0.1% → 809.5 ± 0.1% are detected, then the hide sample is attributed to a hinny.

2. The method for identifying animal hides according to claim 1, wherein the animal hides comprise donkey hide, horse hide, mule hide and cow hide.

3. The method for identifying animal hides according to claim 1, wherein the preparation of the test solution in step (1) comprises: removing the hide sample to be tested of hair, subcutaneous fat layer and other impurities, cutting into chippings of 2mm below, weighing 0.01g into 1.5ml EP tube, adding 1ml 1% (w/w) NH₄HCO₃ solution (pH8.0), subsequently adding 100µl 2mg/ml trypsin solution, hydrolyzed the mixture at constant 37°C for 6h, then filtered the resulting solution through a microporous membrane.

4. The method for identifying animal hides according to claim 1, wherein ion pairs of m/z 386.3 - 402.3, and 386.3 - 499.3; m/z 393.3 - 402.3, and 393.3 - 499.3; m/z 690.8 → 752.4, and 690.8 → 809.5 are selected as detecting ion pairs in MRM scan in step (2).

## Patentansprüche

1. Das Verfahren zur Identifizierung von Tierhäuten, in dem die folgenden Schritte enthalten sind:
(1) Herstellung der Testlösung: Befreien der Hautprobe von Haaren, subkutaner Fettschicht und anderen Verunreinigungen, Aufschließen unter Verwendung von Trypsin;
(2) Detektion mittels Flüssigchromatographie-Massenspektrometrie; und
(3) Bestimmung, zu welcher Art von Tierhaut die Hautprobe gehört, anhand der Massenspektren der Probe,
**dadurch gekennzeichnet, dass**
Schritt (2): Anwenden der Mehrfachreaktionsüberwachungstechnik im Elektrospray-Positivionenmodus, Absuchen folgender zu detektierender Ionen: m/z 386,3 ± 0,1% → 402,3 ± 0,1%, 386,3 ± 0,1% → 499,3 ± 0,1%, m/z 393,3 ± 0,1% → 402,3 ± 0,1%, 393,3 ± 0,1% → 499,3 ± 0,1%, m/z 690,8 ± 0,1% → 752,4 ± 0,1%, 690,8 ± 0,1% → 809,5 ± 0,1%; wobei die bei der Flüssigchromatographie-Massenspektrometrie-Detektion verwendeten LC-Bedingungen sind: 2,1 mm × 100 mm, 1,8 µm C₁₈-Reversierte-Phase-Säule, die mobile Phase A ist 0,1%ige Ameisensäurelösung, die mobile Phase B ist Acetonitril, die Flussrate ist 0,3 ml/min, und der verwendete Elutionsgradient ist 0 ~ 25min, 2% ~20% B; und
Schritt (3): nur der Peak des Massenspektrums, dessen zwei Sub-Ionen, die demselben Mutter-Ion entsprechen, gleichzeitig detektiert werden, wird als Zielpeak für die Identifizierung verwendet:
a) wenn nur die Peaks der lonenpaare m/z 393,3 ± 0,1% → 402,3 ± 0,1% und 393,3 ± 0,1% → 499,3 ± 0,1%; m/z 690,8 ± 0,1% → 752,4 ± 0,1% und 690,8 ± 0,1% → 809, 5 ± 0,1% detektiert werden, während die Peaks von m/z 386,3 ± 0,1% → 402,3 ± 0,1% und 386,3 ± 0,1% → 499,3 ± 0,1% nicht detektiert werden, wird die Hautprobe einem Esel zugeordnet;
b) wenn nur die Peaks der lonenpaare m/z 393,3 ± 0,1 % → 402,3 ± 0,1 % und 393,3 ± 0,1 % → 499,3 ± 0,1 % detektiert werden, während die Peaks von m/z 386,3 ± 0,1 % → 402,3 ± 0,1 % und 386,3 ± 0,1 % → 499,3 ± 0,1 %; m/z 690,8 ± 0,1 % → 752,4 ± 0,1 % und 690,8 ± 0,1 % → 809,5 ± 0,1 % nicht detektiert werden, wird die Hautprobe einer Kuh zugeordnet;
c) Wenn nur die Peaks der lonenpaare m/z 386,3 ± 0,1% → 402,3 ± 0,1% und 386,3 ± 0,1% → 499,3 ± 0,1% detektiert werden, während die Peaks von m/z 393,3 ± 0,1% → 402,3 ± 0,1 % und 393,3 ± 0,1 % → 499,3 ± 0,1 %; m/z 690,8 ± 0,1 % → 752,4 ± 0,1 % und 690,8 ± 0,1 % → 809,5 ± 0,1 % nicht detektiert werden, wird die Hautprobe einem Maultier oder einem Pferd zugeordnet;
d) wenn alle folgenden Peaks: m/z 386,3 ± 0,1% → 402,3 ± 0,1% und 386,3 ± 0,1% → 499,3 ± 0,1%; m/z 393,3 ± 0,1% → 402,3 ± 0,1% und 393,3 ± 0,1 % → 499,3 ± 0,1 %; m/z 690,8 ± 0,1 % → 752,4 ± 0,1 % und 690,8 ± 0,1 % → 809,5 ± 0,1 % detektiert werden, dann wird die Hautprobe einem Maulesel zugeordnet.

2. Das Verfahren zur Identifizierung von Tierhäuten gemäß Anspruch 1, wobei die Tierhäute Eselshaut, Pferdehaut, Maultierhaut und Kuhhaut umfassen.

3. Das Verfahren zur Identifizierung von Tierhäuten gemäß Anspruch 1, wobei die Herstellung der Testlösung in Schritt (1) Folgendes enthält: Befreien der zu testenden Hautprobe von Haaren, subkutaner Fettschicht und anderen Verunreinigungen, Schneiden in Schnitte von weniger als 2 mm, Abwiegen von 0,01 g in ein 1,5-ml-EP-Röhrchen, Zugabe von 1 ml 1 %iger (w/w) NH₄HCO₃-Lösung (pH 8,0), anschließende Zugabe von 100 µl 2 mg/ml-Trypsinlösung, Hydrolyse des Gemischs bei konstanten 37 °C für 6 Stunden, anschließendes Filtern der resultierenden Lösung durch eine mikroporöse Membran.

4. Das Verfahren zur Identifizierung von Tierhäuten gemäß Anspruch 1, wobei die lonenpaare m/z 386,3 → 402,3 und 386,3 → 499,3; m/z 393,3 → 402,3 und 393,3 → 499,3; m/z 690,8 → 752,4 und 690,8 → 809,5 in der MRM-Absuche in Schritt (2) als zu detektierende lonenpaare ausgewählt werden.

## Revendications

1. Le procédé d'identification des peaux d'animaux, dans lequel les étapes suivantes sont comprises :
(1) préparation de la solution de test : élimination de l'échantillon de peau des poils, de la couche de graisse sous-cutanée et d'autres impuretés, digestion à l'aide de trypsine ;
(2) détection en utilisant la chromatographie liquide et la spectrométrie de masse ; et
(3) détermination de l'appartenance de l'échantillon dermique à un type de peau animale en fonction des spectres de masse de l'échantillon,
**caractérisé en ce que**
étape (2) : appliquer la technique de surveillance des réactions multiples en mode ion positif électrospray, scanner les ions de détection suivants : m/z 386,3 ± 0,1 % → 402,3 ± 0,1 %, 386,3 ± 0,1% → 499,3 ± 0,1%, m/z 393,3 ± 0,1 % → 402,3 ± 0,1%, 393,3 ± 0,1% → 499,3 ± 0,1%, m/z 690,8 ± 0,1% → 752,4 ± 0,1%, 690,8 ± 0,1% → 809,5 ± 0,1% ; dans laquelle les conditions LC utilisées dans la détection par chromatographie liquide-spectrométrie de masse sont : 2,1 mm × 100 mm, 1,8 µm C₁₈ colonne de phase inversée, la phase mobile A est une solution d'acide formique à 0,1%, la phase mobile B est l'acétonitrile, le débit est de 0,3ml/min, et le gradient d'élution utilisé est de 0 - 25min, 2% -20% B ;
étape (3) : seulement le pic du spectre de masse dont les deux sous-ions correspondant au même ion parent détectés simultanément sont utilisés comme pic cible pour l'identification :
a) lorsque seulement les pics des paires d'ions m/z 393,3 ± 0,1% → 402,3 ± 0,1%, et 393,3 ± 0,1% → 499,3 ± 0,1% ; m/z 690,8 ± 0,1% → 752,4 ± 0,1%, et 690,8 ± 0,1% → 809,5 ± 0,1% sont détectés, tandis que les pics de m/z 386,3 ± 0,1% → 402,3 ± 0,1%, et 386,3 ± 0,1% → 499,3 ± 0,1% ne sont pas détectés, l'échantillon de peau est attribué à un âne ;
b) lorsque seulement les pics des paires d'ions m/z 393,3 ± 0,1% → 402,3 ± 0,1%, et 393,3 ± 0,1% → 499,3 ± 0,1% sont détectés, tandis que les pics de m/z 386,3 ± 0,1% → 402,3 ± 0,1%, et 386,3 ± 0,1% → 499,3 ± 0,1% ; m/z 690,8 ± 0,1% → 752,4 ± 0,1%, et 690,8 ± 0,1% → 809,5 ± 0,1% ne sont pas détectés, l'échantillon de peau est attribué à une vache ;
c) lorsque seulement les pics des paires d'ions m/z 386,3 ± 0,1% → 402,3 ± 0,1%, et 386,3 ± 0,1% → 499,3 ± 0,1%, sont détectés, tandis que les pics des paires d'ions m/z 393,3 ± 0,1% → 402,3 ± 0,1%, et 393,3 ± 0,1% → 499,3 ± 0,1% ; m/z 690,8 ± 0,1% → 752,4 ± 0,1%, et 690,8 ± 0,1% → 809,5 ± 0,1% ne sont pas détectés, l'échantillon de peau est attribué à un mulet ou à un cheval ;
d) lorsque tous les pics suivants : m/z 386,3 ± 0,1% → 402,3 ± 0,1%, et 386,3 ± 0,1% → 499,3 ± 0,1% ; m/z 393,3 ± 0,1% → 402,3 ± 0,1%, et 393,3 ± 0,1% → 499,3 ± 0,1% ; m/z 690,8 ± 0,1% → 752,4 ± 0,1%, et 690,8 ± 0,1% → 809,5 ± 0,1% sont détectés, l'échantillon de peau est alors attribué à un bardot.

2. Le procédé d'identification des peaux d'animaux selon la revendication 1, dans lequel les peaux d'animaux comprennent la peau d'âne, la peau de cheval, la peau de mulet et la peau de vache.

3. Le procédé d'identification des peaux d'animaux selon la revendication 1, dans lequel la préparation de la solution de test à l'étape (1) comprend : l'élimination de l'échantillon de peau à tester des poils, de la couche de graisse sous-cutanée et d'autres impuretés, la coupe en copeaux de moins de 2 mm, la pesée de 0,01g dans un tube EP de 1,5ml, en ajoutant 1ml de solution de NH₄HCO₃ à 1% (p/p) (pH8,0), en ajoutant ensuite 100µl de solution à 2mg/ml de trypsine, hydrolyse du mélange à une température constante de 37°C pendant 6 heures, puis la filtration de la solution obtenue à travers une membrane microporeuse.

4. Le procédé d'identification des peaux animales selon la revendication 1, selon lequel les paires d'ions de m/z 386,3 → 402,3, et 386,3 → 499,3 ; m/z 393,3 → 402,3, et 393,3 → 499,3 ; m/z 690,8 → 752,4, et 690,8 → 809,5 sont sélectionnées comme paires d'ions de détection dans la scannérisation MRM à l'étape (2).
